# EUROPEAN PATENT APPLICATION

(11) **EP 4 550 172 A1**
(43) Date of publication of application: **07.05.2025**
(21) Application number: 23862728.5
(22) Date of filing: 05.06.2023
(51) Int. Cl.: G06F 16/583, G06T 7/00

(54) **PERSON SEARCH DEVICE AND PERSON SEARCH METHOD**

(30) Priority: 08.09.2022 JP 2022142843
(71) Applicant: JVCKenwood Corporation, Yokohama-shi, Kanagawa 2210022 (JP)
(72) Inventor: SAKANO Masakiyo, Yokohama-shi Kanagawa 221-0022 (JP)
(74) Representative: Pritzlaff, Stefanie Lydia
(86) International application number: PCT/JP2023/020796
(87) International publication number: WO 2024/053183

(57) **Abstract**

A person search apparatus 16 acquires person identification information adapted to identify each person detected in an image captured by an imaging apparatus 12, executes a predetermined image process on the captured image so that the person shown in the captured image is not identified, and records the image subjected to the image process and the person identification information corresponding to the image. The person search apparatus 16 acquires searched person information that is information related to a person to be searched and searches for a person indicated by the searched person information from persons indicated by the person identification information recorded in advance. The person search apparatus 16 presents information indicating that the person indicated by the searched person information is shown when the person indicated by the searched person information is extracted from the persons indicated by the person identification information.

## Description

### TECHNICAL FIELD

The present invention relates to a person search apparatus and a person search method.

### BACKGROUND ART

In the case of shooting a video in an environment where an unspecified number of people are shot, a technology for protecting privacy, such as automatically pixelating a person shown in the video, so that the person captured is not identified is in widespread use (see, for example, Patent Literature 1 and Patent Literature 2). In addition, a technology for detecting a specific person by performing face recognition, etc. in an image capturing an unspecified number of people is also in widespread use (see, for example, Patent Literature 3).

### RELATED-ART LITERATURE

### PATENT LITERATURE

Patent Literature 1: JP2004-062560
Patent Literature 2: JP2009-284235
Patent Literature 3: JP2004-152733

### SUMMARY OF INVENTION

### TECHNICAL PROBLEM

It is difficult to detect a specific person from a video that has been processed for privacy protection, and the use of the video (e.g., search for a specific person) may be hindered.

The present invention addresses the issue described above, and a general purpose thereof is to provide a technology of realizing a search for a person while protecting the privacy of a person shown in the captured image.

### SOLUTION TO PROBLEM

A person search apparatus according to an embodiment of the present invention includes: a person detection unit that detects a person shown in a captured image; a person identification information acquisition unit that acquires person identification information adapted to identify each person detected by the person detection unit; an image processing unit that executes a predetermined image process on the captured image so that the person shown in the captured image is not identified; a recording control unit that records the image subjected to the predetermined image process and the person identification information corresponding to the image; a searched person information acquisition unit that acquires searched person information that is information related to a person to be searched; a search unit that searches for a person indicated by the searched person information from persons indicated by the person identification information recorded in advance; and a presentation unit that presents information indicating that the person indicated by the searched person information is shown when the person indicated by the searched person information is extracted from the persons indicated by the person identification information.

Another embodiment of the present invention relates to a person search method. The method includes: detecting a person shown in a captured image; acquiring person identification information adapted to identify each person detected in the detecting; executing a predetermined image process on the captured image so that the person shown in the captured image is not identified; recording the image subjected to the predetermined image process and the person identification information corresponding to the image; acquiring searched person information that is information related to a person to be searched; searching for a person indicated by the searched person information from persons indicated by the person identification information recorded in advance; and presenting information indicating that the person indicated by the searched person information is shown when the person indicated by the searched person information is extracted from the persons indicated by the person identification information.

Optional combinations of the aforementioned constituting elements, and implementations of the present invention in the form of systems, computer programs, and recording mediums recording computer programs may also be practiced as additional embodiments of the present invention.

### ADVANTAGEOUS EFFECTS OF INVENTION

According to the present invention, a search for a person can be realized while protecting the privacy of a person shown in the captured image.

### BRIEF DESCRIPTION OF DRAWINGS

[Fig. 1] Fig. 1 shows an exemplary configuration of the person search system of the first embodiment.
[Fig. 2] Fig. 2 is a block diagram showing functional blocks provided in the person search apparatus of the first embodiment.
[Fig. 3] Fig. 3 is a flowchart showing an exemplary operation of the person search apparatus of the first embodiment.
[Fig. 4] Fig. 4 is a flowchart showing an exemplary operation of the person search apparatus of the first embodiment.
[Fig. 5] Fig. 5 shows an exemplary configuration of the person search system of the second embodiment.
[Fig. 6] Fig. 6 is a block diagram showing functional blocks included in the person search apparatus of the second embodiment.
[Fig. 7] Fig. 7 is a flowchart showing an exemplary operation of the person search apparatus of the second embodiment.
[Fig. 8] Fig. 8 is a flowchart showing an exemplary operation of the person search apparatus of the second embodiment.
[Fig. 9] Fig. 9 is a flowchart showing an exemplary operation of the person search apparatus of the third embodiment.

### DESCRIPTION OF EMBODIMENTS

An outline of an embodiment according to the present invention will be described. The person search system of the embodiment according to the present invention creates person identification information that is information adapted to identify a person shown in a captured image and stores an image that is processed for privacy protection and the person identification information, associating the image and the information with each other. The person identification information can be said to be information that can identify a person shown in a captured image. When the user designates a person to be searched, the person search system searches for the person to be searched from the persons indicated by the person identification information stored in advance and presents the search result to the user. As a result, it is possible to search for a person while protecting the privacy of the person shown in the captured image.

### <First embodiment>

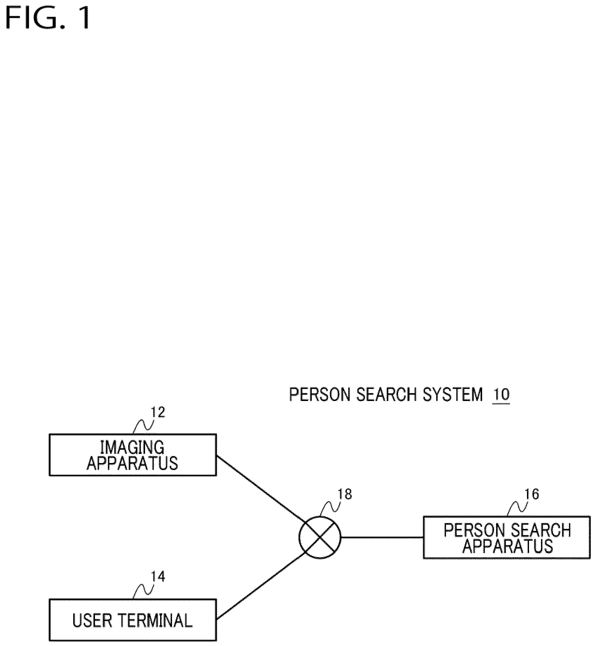

Fig. 1 shows an exemplary configuration of the person search system 10 of the first embodiment. The person search system 10 is an information processing system in which an imaging apparatus 12, a user terminal 14, and a person search apparatus 16 are connected via a communication network 18. The communication network 18 is comprised of a known communication form such as LAN, WAN, and the Internet. The person search system 10 may be configured such that the imaging apparatus 12, the user terminal 14, and the person search apparatus 16 transmit and receive data such as images by using a portable storage medium or storage apparatus without being mediated by the communication network 18.

The imaging apparatus 12 is a camera or a camera system and images a space within the angle of view in the camera's shooting direction. The imaging apparatus 12 sequentially outputs data for the captured image (hereinafter also referred to as "captured image") to an external apparatus. In this embodiment, the imaging apparatus 12 transmits the captured image to the person search apparatus 16. The captured image captured by the imaging apparatus 12 is assumed to be a movie (in other words, a video), but the captured image may be a still image in one variation.

The person search apparatus 16 is an information processing apparatus that provides a person search service based on a captured image captured by the imaging apparatus 12.

The imaging apparatus 12 and the person search apparatus 16 are, in one specific example, the imaging apparatus 12 as a camera used in a public broadcasting station and the person search apparatus 16 as a server for storing captured images captured by the imaging device 12.

The user terminal 14 is an information terminal controlled by a user who uses the person search service provided by the person search apparatus 16. The user terminal 14 may be a computer, a tablet terminal or a smartphone. Fig. 1 depicts one imaging apparatus 12 and one user terminal 14, but the person search system 10 may include a plurality of imaging apparatuses 12 or a plurality of user terminals 14. In one specific example, the user terminal 14 is an information terminal used by an organization that needs to search for a particular person from a captured image taken for public broadcasting. For example, the user terminal 14 is an information terminal used by a public institution such as the police.

The person search system 10 is configured such that searched person information described later can be directly input to the person search apparatus 16. In the case the person search apparatus 16 is configured to present a captured image, etc. showing the person indicated by the searched person information, the person search system 10 includes the imaging apparatus 12 and the person search apparatus 16.

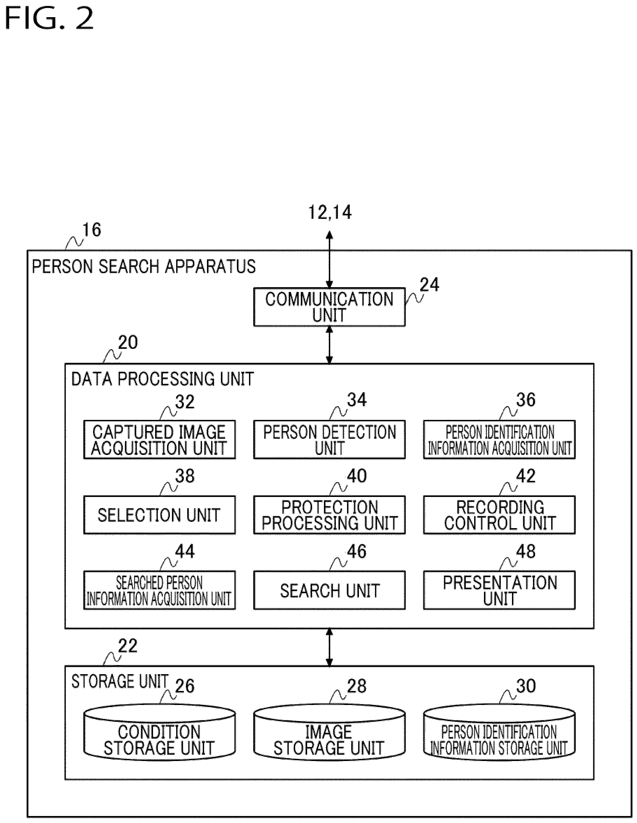

Fig. 2 is a block diagram showing functional blocks provided in the person search apparatus 16 of the first embodiment. The blocks depicted in the block diagrams of this specification are implemented in hardware by devices/electronic circuits/mechanical apparatuses exemplified by a processor, a CPU, and a memory of a computer, and in software by a computer program, etc. Fig. 2 depicts functional blocks implemented by the cooperation of these elements. Therefore, it will be understood by those skilled in the art that the functional blocks may be implemented in a variety of manners by a combination of hardware and software.

The person search apparatus 16 includes a data processing unit 20, a storage unit 22, and a communication unit 24. The data processing unit 20 executes a data process related to the person search service. The data processing unit 20 may be implemented by a processor (CPU, etc.) of the person search apparatus 16. The storage unit 22 stores data referenced or updated by the data processing unit 20. The communication unit 24 communicates with the external apparatus according to a predetermined communication protocol. The data processing unit 20 transmits and receives data to and from the imaging apparatus 12 and the user terminal 14 via the communication unit 24.

The storage unit 22 includes a condition storage unit 26, an image storage unit 28, and a person identification information storage unit 30. The condition storage unit 26 stores a condition related to a person who is not subject to privacy protection. In this embodiment, the condition storage unit 26 stores information that can identify a person excluded from protection as a condition for a person excluded from protection who is a person for whom a privacy protection process is not necessary, i.e., a person who does not need to be pixelated. Information that can identify a person excluded from protection includes information indicating a feature of the appearance of the person excluded from protection and includes, for example, information indicating a facial feature of the person excluded from protection.

The image storage unit 28 stores a privacy-protected image that is an image derived from conversion from the captured image and is an image in which the privacy is protected so that the person shown in the captured image cannot be identified. The privacy-protected image is an image derived from subjecting the captured image to an image process for privacy protection. In one example, the privacy-protected image is an image derived from pixelating the captured image.

The person identification information storage unit 30 stores person identification information that is information related to each of one or more persons shown in the captured image and is information that includes an element that can identify each person. The person identification information is created for each captured image and for each person shown in the captured image.

The person identification information of the first embodiment includes an image ID, a position in the image, and feature information. The person indicated by the person identification information is referred to as a targeted person here. The image ID is an ID that identifies a captured image showing the targeted person and is also an ID that identifies a privacy-protected image in which the privacy of the targeted person in the captured image is protected. The position in the image is information indicating the position where the targeted person is shown in the captured image and is also information indicating the position in which the targeted person is shown in the privacy-protected image in which the privacy of the targeted person is protected in the captured image. The position in the image is indicated by, for example, information indicating the coordinate value in the captured image. The feature information is information indicating a feature of the targeted person that can uniquely identify the targeted person. The feature information is information indicating a feature of the appearance of the targeted person shown in the captured image and includes information indicating a facial feature of the targeted person. For example, the feature information includes information indicating a feature such as the shape of the outline of the face of the targeted person and the arrangement of facial parts.

The data processing unit 20 includes a captured image acquisition unit 32, a person detection unit 34, a person identification information acquisition unit 36, a selection unit 38, a protection processing unit 40, a recording control unit 42, a searched person information acquisition unit 44, a search unit 46, and a presentation unit 48. The functions of at least some of these plurality of functional blocks may be implemented in a computer program. This computer program may be installed in the storage of the person search apparatus 16 via a recording medium or a network. The processor of the person search apparatus 16 may cause the plurality of functional blocks above to exhibit the functions by reading this computer program into the main memory and executing the program.

The captured image acquisition unit 32 acquires the captured image output from the imaging apparatus 12. The person search system 10 may further include a storage apparatus for storing the captured image output from the imaging apparatus 12. In this case, the captured image acquisition unit 32 may acquire the captured image captured by the imaging apparatus 12 from the storage apparatus mentioned above.

The person detection unit 34 analyzes the captured image to detect a person shown in the captured image, i.e., detect an image of a person in the captured image. The person identification information acquisition unit 36 analyzes the captured image and acquires the person identification information related to each person detected by the person detection unit 34. Acquisition of the person identification information includes generation of the person identification information. As described above, the person identification information includes an image ID, a position in the image, and feature information.

The selection unit 38 determines whether a person shown in the captured image, i.e., each person detected by the person detection unit 34 is subject to privacy protection based on the condition stored in the condition storage unit 26. The selection unit 38 selects the person as a subject excluded from privacy protection when the feature information indicated by the person identification information acquired by the person identification information acquisition unit 36 for the person shown in the captured image matches the feature information on the person excluded from protection stored in the condition storage unit 26. When the feature information indicated by the person identification information acquired by the person identification information acquisition unit 36 for the person shown in the captured image does not match the feature information on the person excluded from protection stored in the condition storage unit 26, on the other hand, the selection unit 38 selects the person as a subject of privacy protection.

A person who is not subject to privacy protection is a person who is intentionally captured in a captured image, i.e., a performer, etc. A person who is not subject to privacy protection may be, for example, a reporter and a person who has agreed to be interviewed. A person subject to privacy protection is a person who is unintentionally captured in a captured image, such as a passerby. A person subject to privacy protection may hereinafter be referred to as a protected person, and a person who is not subject to privacy protection may hereinafter be referred to as a non-protected person.

The protection processing unit 40 as an image processing unit executes a predetermined image process on the captured image so that, of the persons shown in the captured image, the person subject to protection selected by the selection unit 38 as being a subject of privacy protection is not identified. By way of an example of the predetermined image process, the protection processing unit 40 executes a process of pixelating the face image of the protected person. Meanwhile, the protection processing unit 40 does not pixelate the person selected by the selection unit 38 as the non-protected person. Thus, the protection processing unit 40 converts the captured image into an image in which the identity of the protected person, who is a person subject to privacy protection, is not identified.

The image process executed by the protection processing unit 40 may be painting the face image of the protected person in black or replacing the data for the face image by alternative data.

The recording control unit 42 records the privacy-protected image subjected to pixelation by the protection processing unit 40 and the person identification information corresponding to the privacy-protected image (the person identification information in which the ID of the privacy-protected image is set). In this embodiment, the recording control unit 42 stores the data for the privacy-protected image including the image ID in the image storage unit 28 and stores the person identification information including the image ID of the privacy-protected image and related to each of the persons shown in the privacy-protected image in the person identification information storage unit 30. In one variation, the recording control unit 42 may embed the person identification information in the data for the privacy-protected image and may store the data for the privacy-protected image in which the person identification information is embedded in the image storage unit 28. Further, the recording control unit 42 may save the privacy-protected image and, at the same time, may delete the captured image originating the privacy-protected image. For example, the captured image may be deleted in the storage area.

The searched person information acquisition unit 44 acquires searched person information that is the information on the searched person transmitted from the user terminal 14. The searched person information acquired by the searched person information acquisition unit 44 is an image showing the searched person. The searched person information acquisition unit 44 acquires the feature information on the searched person shown in the image of the searched person information and acquires, for example, the facial feature information on the searched person. In one variation, the searched person information transmitted from the user terminal 14 is information indicating the feature of the searched person. For example, the searched person information may include facial feature information on the face of the searched person. The searched person information acquisition unit 44 may acquire the feature information on the searched person from the searched person information.

The search unit 46 searches for the person indicated by the searched person information acquired by the searched person information acquisition unit 44 from the persons indicated by the person identification information stored in the person identification information storage unit 30. The person indicated by the searched person information is the person for whom the searched person information and the person identification information match or the person who shows a level of match equal to or higher than a predetermined threshold value. In the first embodiment, the search unit 46 searches for the person indicated by the searched person information based on the facial feature information included in the person identification information. The search unit 46 compares the feature information (e.g., the facial feature information) on a plurality of persons indicated by a plurality of person identification information items and the feature information (e.g., the facial feature information) on the searched person and extracts the searched person from the plurality of persons indicated by the plurality of person identification information items. When the searched person information indicating the facial feature of the person indicated by given person identification information matches the person identification information indicating the facial feature of the searched person corresponding to the privacy-protected image, or when the difference is within a predetermined threshold value, for example, the search unit 46 may extract the person indicated by the person identification information as the searched person.

When the searched person indicated by the searched person information is extracted from the persons indicated by the person identification information stored in the person identification information storage unit 30, the presentation unit 48 presents the user with information indicating that the searched person is shown. The information indicating that the searched person is shown is, for example, a privacy-protected image in which a mark is attached to the searched person. For example, the presentation unit 48 may acquire, from the image storage unit 28, the privacy-protected image identified by the image ID associated with the person identification information that matches the searched person and may transmit, to the user terminal 14, the privacy-protected image in which a mark is attached to the image of a person at the position in the image indicated by the person identification information that matches the searched person.

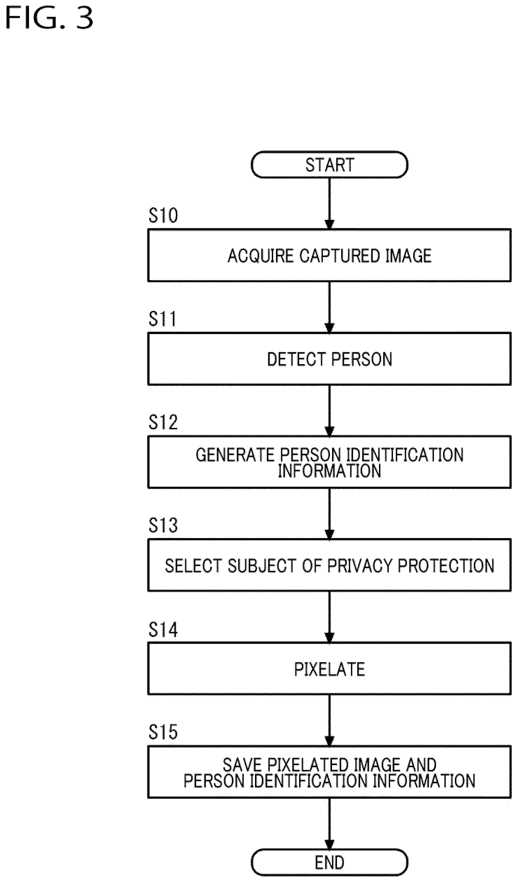

The operation of the person search system 10 according to the above configuration will be described. Fig. 3 is a flowchart showing an exemplary operation of the person search apparatus 16 of the first embodiment. The captured image acquisition unit 32 of the person search apparatus 16 acquires the captured image output from the imaging apparatus 12 (step S10). The captured image acquisition unit 32 may acquire the captured image captured by the imaging apparatus 12 in a streaming format or may acquire the captured image captured by the imaging apparatus 12 and recorded in the recording apparatus of the imaging apparatus 12.

Further, the imaging apparatus 12 may distinguish between a captured image in which a person search process is performed and a captured image in which a person search process is not required, based on the location, situation of shooting, etc. and may transmit the captured image to the person search apparatus 16. In such a case, the image storage unit 28 stores a captured image in which a person search process is performed and a captured image in which a person search process is not required, and the person detection unit 34 detects a person in the captured image in which a person search process is performed. Examples of captured images in which a person search process is not required include captured images in which only those persons who are not subject to privacy protection are shown and images taken in a broadcast studio. Examples of captured images in which a person search process is performed include captured images in which an unspecified number of persons are captured. A distinction between the captured image in which a person search process is performed and the captured image in which a person search process is not required may be automatically based on the shooting condition or may be made by the one who shoots the image.

The person detection unit 34 detects a person shown in the captured image acquired in step S10 (step S11). The person identification information acquisition unit 36 acquires or generates person identification information related to the detected person who is a person detected by the person detection unit 34 (step S12). As described above, the person identification information includes an image ID of the captured image, a position in the image, and feature information.

The selection unit 38 selects the detected person as a subject of privacy protection or as a subject excluded from privacy protection based on the feature information on the person excluded from protection stored in the condition storage unit 26 (step S13). When the detected person is selected as a subject of privacy protection, the protection processing unit 40 pixelates the facial portion of the detected person in the captured image (step S14). Each time a person shown in the captured image is detected, the person search apparatus 16 repeatedly executes the processes shown in steps S12-S14 of Fig. 3.

The recording control unit 42 stores, in the image storage unit 28, a privacy-protected image in which the detected person subject to privacy protection shown in the captured image is pixelated. Along with this, the recording control unit 42 stores, in the person identification information storage unit 30, the person identification information related to each person detected in the captured image and including the ID of the privacy-protected image (step S15). Each time the person search apparatus 16 receives a captured image captured by the imaging apparatus 12, the person search apparatus 16 repeatedly executes the processes shown in steps S10-S15 of Fig. 3.

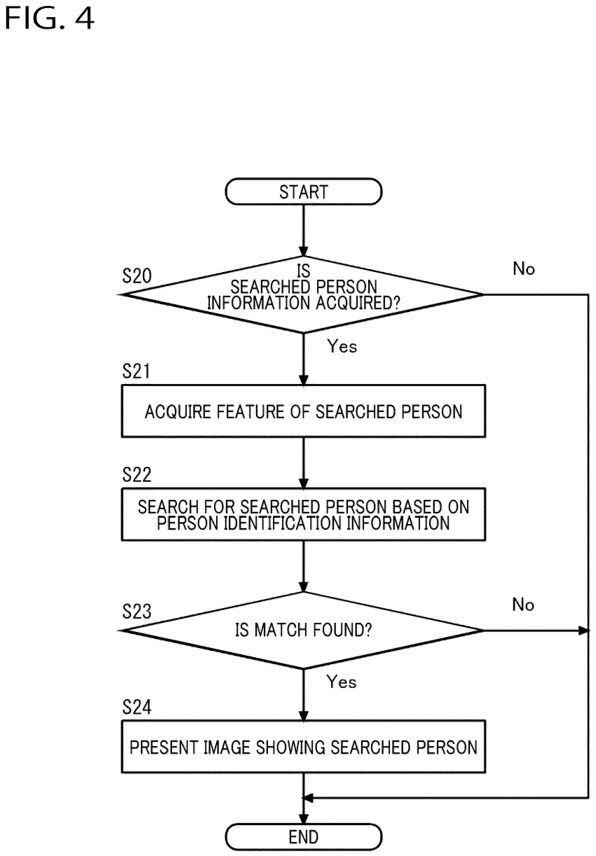

Fig. 4 is a flowchart showing an exemplary operation of the person search apparatus 16 of the first embodiment. The user terminal 14 transmits a person search request including the image of the searched person designated by the user to the person search apparatus 16. When the searched person information acquisition unit 44 acquires the searched person information transmitted from the user terminal 14 (Yes in step S20), the searched person information acquisition unit 44 proceeds to step S21. When the searched person information acquisition unit 44 does not acquire the searched person information transmitted from the user terminal 14 (No in step S20), the process of Fig. 4 is terminated.

In step S21, the searched person information acquisition unit 44 acquires the feature information related to the searched person based on the image of the searched person. In step S22, the search unit 46 compares the feature information (e.g., the face feature information) on the plurality of persons indicated by the plurality of person identification information items stored in the person identification information storage unit 30 with the feature information (e.g., the face feature information) on the searched person and searches for the searched person from the plurality of persons indicated by the plurality of person identification information items (step S22).

When the person matching the searched person is extracted from the plurality of persons indicated by the plurality of person identification information items by the process of step S22 (Yes in step S23), the process proceeds to step S24. In step S24, the presentation unit 48 transmits information indicating that the searched person is shown to the user terminal 14 in response to the person search request. If the person matching the searched person is not extracted from the plurality of persons indicated by the plurality of person identification information items (No in step S23), the process of Fig. 4 is terminated.

Each time the person search apparatus 16 receives a person search request transmitted from the user terminal 14, the person search apparatus 16 may repeatedly execute the processes of steps S20-steps S24 of Fig. 4. The presentation unit 48 may, in the case of No in step S23, transmit information to the user terminal 14 indicating that the searched person is not shown in response to the person search request, although the feature is not shown in Fig. 4.

According to the person search apparatus 16 of the first embodiment, it is possible to meet both privacy protection for the person shown in the captured image and person search. For example, a footage of a street interview or a footage shot by a fixed camera can be used to search for a missing person or to prove the commission of a crime, based on a privacy-protected version of the footage, while protecting the privacy of individuals. In further accordance with the person search apparatus 16 of the first embodiment, person search can be realized without removing the privacy protection process of the privacy-protected image, and the load of the search process can be reduced. In still further accordance with the person search apparatus 16 of the first embodiment, the storage capacity can be reduced because only the privacy-protected image is saved without saving the captured image before the privacy protection process.

In the above-described embodiment, the searched person information acquisition unit 44 acquires the searched person information from the user terminal 14 but may further acquire the information indicating the search range for the searched person in addition to the searched person information. The information indicating the search scope for the searched person comprises a temporal range and a positional range. In this case, the recording control unit 42 additionally records the shooting date and time and the shooting location of the privacy-protected image. Therefore, the search unit 46 can extract the searched person from the person identification information corresponding to the privacy-protected image that meets the search range for the searched person acquired from the user terminal 14 so that the processing load can be reduced.

### <Second embodiment>

In the second embodiment, the difference from the first embodiment will be mainly described, and a description of common features will be omitted. Of course, the feature of the second embodiment can be arbitrarily combined with the feature of the first embodiment and the feature of the variation.

The person search apparatus 16 of the second embodiment searches for a particular person shown in the captured image by using the ID of the person. Specifically, the person identification information stored in the person identification information storage unit 30 that can identify each person shown in the captured image includes ID information on each person. The search unit 46 searches for the person indicated by the searched person information based on the ID information indicated by the person identification information stored in advance. Further, the person search apparatus 16 of the second embodiment is provided with a function of concealing the person identification information.

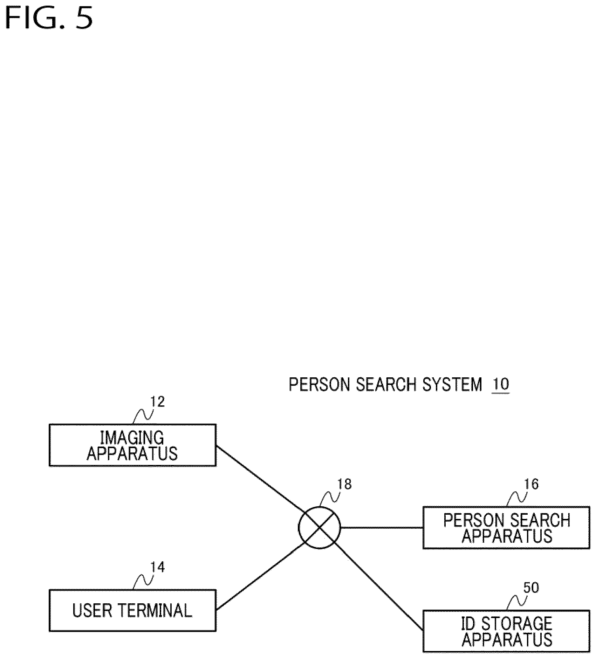

Fig. 5 shows an exemplary configuration of the person search system 10 of the second embodiment. The person search system 10 of the second embodiment further includes an ID storage apparatus 50 in addition to the apparatuses provided in the person search system 10 of the first embodiment. The person search apparatus 16 is connected to the ID storage apparatus 50 via the communication network 18.

The ID storage apparatus 50 stores the ID information on each of a plurality of persons and the feature information on each person, associating them with each other. The ID information on each person includes an ID that can uniquely identify each person. The ID of each person may, for example, be a number assigned to each person by a public institution. For example, the ID may be a personal number, an individual number, or a social security number. The feature information on each person includes information indicating a feature of the appearance of each person. Further, the feature information included in the person identification information acquired by the person identification information acquisition unit 36 of the person search apparatus 16 includes the same items as the feature information on each person stored in the ID storage apparatus 50.

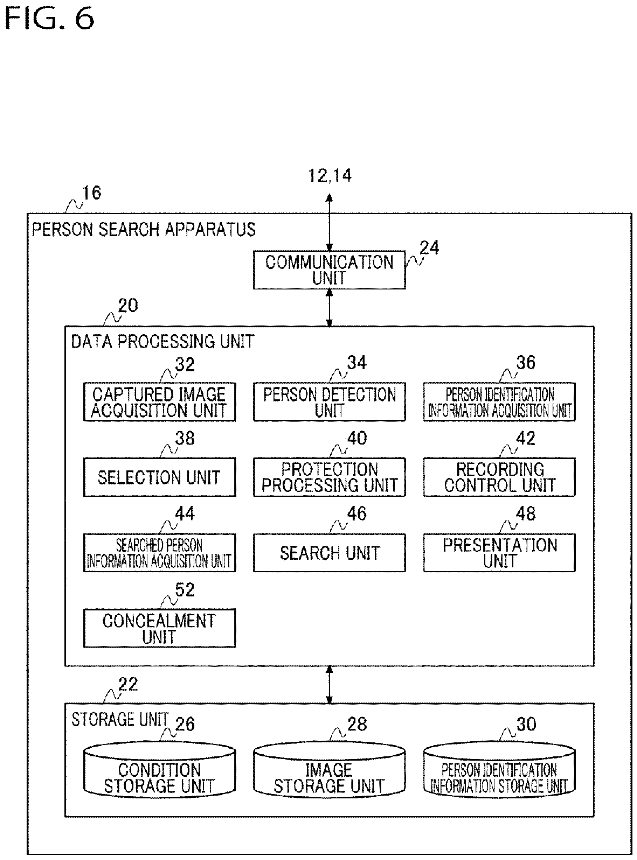

Fig. 6 is a block diagram showing functional blocks included in the person search apparatus 16 of the second embodiment. The person search apparatus 16 of the second embodiment further includes a concealment unit 52 in addition to the functional blocks provided in the person search apparatus 16 of the first embodiment.

The concealment unit 52 processes the person identification information related to the person shown in the captured image acquired by the person identification information acquisition unit 36 to make it difficult for a third party to decipher the information. In other words, the concealment unit 52 makes the information confidential by encrypting the information, etc. so that the person indicated by the person identification information cannot be identified. The data concealed in the second embodiment is the ID information in the person identification information. The concealment unit 52 inputs the ID information to a hash function of a random oracle model that uniquely determines output data in response to input data and acquires the hash value that is output data based on the ID information. In one variation, the concealment unit 52 may encrypt the person identification information based on a predetermined encryption algorithm.

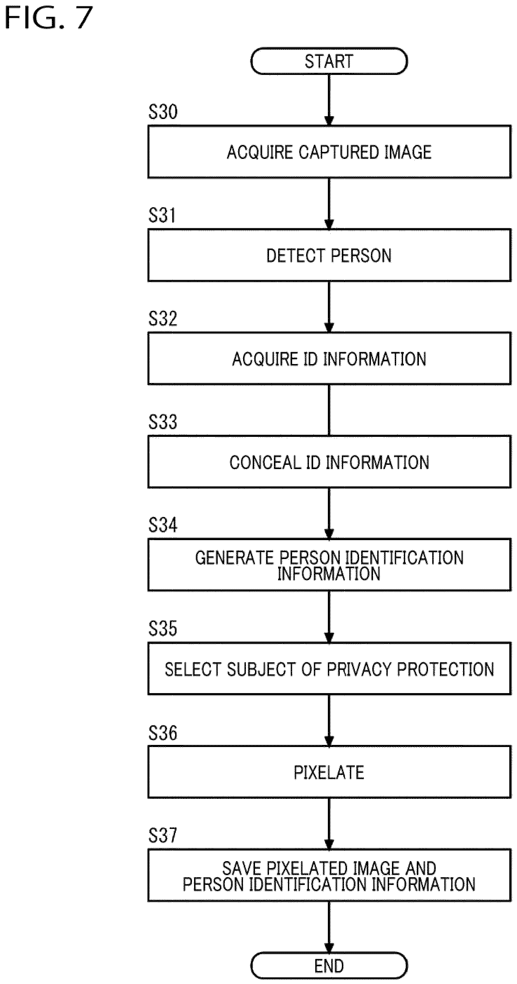

Fig. 7 is a flowchart showing an exemplary operation of the person search apparatus 16 of the second embodiment. The processes of steps S30 and S31 of Fig. 7 are the same as the processes of steps S10 and S11 shown in Fig. 3. In step S32, the person identification information acquisition unit 36 acquires the feature information related to the person detected in the captured image. This feature information includes information indicating a feature of the appearance such as a facial feature of the detected person. The person identification information acquisition unit 36 acquires the ID of the detected person associated with the feature information related to the detected person from the ID storage apparatus 50. As mentioned above, the ID is, for example, a personal number.

In step S33, the concealment unit 52 acquires a value derived from concealing the ID of the detected person acquired by the person identification information acquisition unit 36. Specifically, the concealment unit 52 acquires a confidential ID that is the hash value of the ID of the detected person. In step S34, the person identification information acquisition unit 36 generates the person identification information that includes an image ID, a position in the image, and a confidential ID.

In the second embodiment, the condition storage unit 26 stores the ID of the person excluded from protection for whom the privacy protection process is not required. In step S35, the selection unit 38 selects, when the ID of the detected person matches the ID of the person excluded from protection stored in the condition storage unit 26, the detected person as a subject excluded from privacy protection. When the ID of the detected person does not match the ID of the person excluded from protection, the selection unit 38 selects the detected person as a subject of privacy protection.

In one variation, the condition storage unit 26 may store the ID of the protected person for whom the privacy protection process is required. In step S35, the selection unit 38 selects, when the ID of the detected person matches the ID of the protected person stored in the condition storage unit 26, the detected person as a subject of privacy protection. When the ID of the detected person does not match the ID of the person subject to protection, the selection unit 38 selects the detected person as a subject excluded from privacy protection.

The subsequent processes of steps S36 and S37 are the same as the steps S14 and S15 shown in Fig. 3. The person identification information stored in the person identification information storage unit 30 in the second embodiment includes an image ID, a position in the image, and a confidential ID.

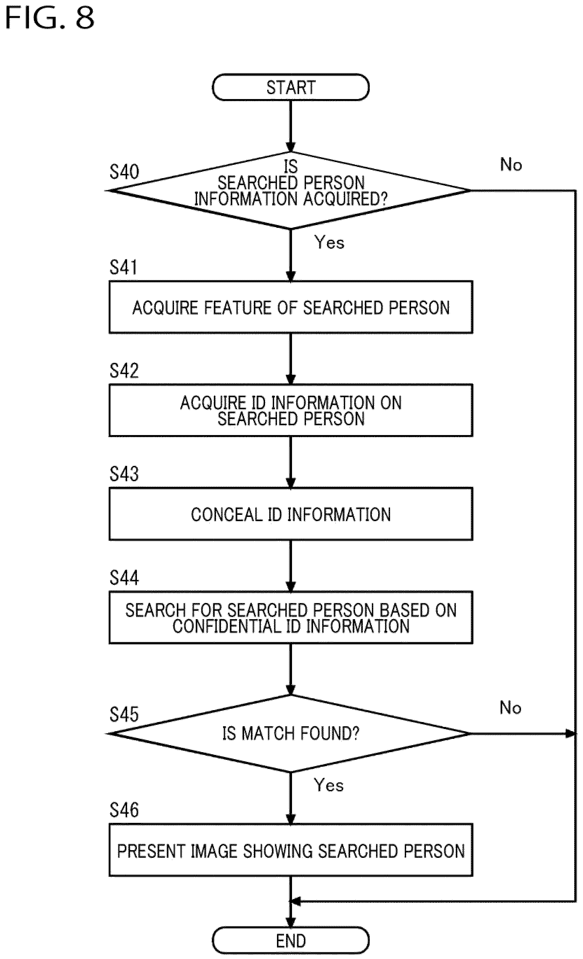

Fig. 8 is a flowchart showing an exemplary operation of the person search apparatus 16 of the second embodiment. The processes of steps S40 and S41 in Fig. 8 are the same as the processes of steps S20 and S21 shown in Fig. 4. In step S42, the searched person information acquisition unit 44 acquires the ID associated with the feature of the searched person, i.e., the ID of the searched person, acquired in step S41 from the ID storage apparatus 50. In step S43, the concealment unit 52 inputs the ID of the searched person acquired by the searched person information acquisition unit 44 to the hash function and acquires the hash value of the ID of the searched person as the confidential ID of the searched person.

In one variation, the searched person information transmitted from the imaging apparatus 12 to the person search apparatus 16 may include the ID of the searched person. In this case, the concealment unit 52 may acquire the confidential ID of the searched person by concealing the ID of the searched person indicated by the searched person information received from the imaging apparatus 12.

In step S44, the search unit 46 searches for the person identification information that includes the confidential ID of the searched person from the plurality of person identification information items stored in the person identification information storage unit 30, thereby searching for the searched person from the plurality of persons indicated by the plurality of person identification information items. The subsequent processes of steps S45 and S46 are the same as the steps S23 and S24 shown in Fig.4.

The person search apparatus 16 of the second embodiment provides the same benefit as the person search apparatus 16 of the first embodiment. Further, in the person search apparatus 16 of the second embodiment, the accuracy of person search can be improved by searching for the searched person based on the ID of the person detected in the captured image and the ID of the searched person. Further, in the person search apparatus 16 of the second embodiment, the privacy of the person shown in the captured image can be more reliably protected by concealing and recording the ID of the person detected in the captured image.

A description will be given of a variation. In the second embodiment above, the concealment unit 52 inputs the person's ID to the hash function and acquires the hash value to conceal the person's ID. In one variation, the concealment unit 52 may obtain an encrypted ID derived from encrypting the person's ID based on a predetermined encryption algorithm to keep the person's ID confidential. The person identification information storage unit 30 may store the person identification information including an image ID, a position in the image, and an encrypted ID. The search unit 46 may search for the searched person from the plurality of persons indicated by the plurality of person identification information items by decrypting the encrypted ID of the plurality of person identification information items stored in the person identification information storage unit 30 and searching for the ID of the searched person acquired from the ID storage apparatus 50 from the plurality of person identification information items.

Another variation will be described. As described above, the first embodiment and the second embodiment can be combined as appropriate. For example, the person identification information stored in the person identification information storage unit 30 may include one or both of the appearance feature information (facial feature, etc.) and the ID of the person detected in the captured image. The searched person information acquisition unit 44 may acquire the searched person information that includes one or both of the feature information and the ID of the searched person. When only the feature information on the searched person is acquired, the search unit 46 may conduct a search based on the feature information on the searched person. When only the ID of the searched person is acquired, the search unit 46 may conduct a search based on the ID of the searched person. Further, when both the feature information and the ID of the searched person are acquired, the search unit 46 preferentially conducts a search based on the ID. When the search based on the ID does not find a match, the search unit 46 may conduct a search based on the feature information. According to this variation, the hit rate can be improved in addition to improving the accuracy of person search.

### <Third Embodiment>

In the third embodiment, the difference from the first and second embodiments are mainly described, and a description of common features is omitted. Of course, the feature of the third embodiment can be arbitrarily combined with the feature of the first and second embodiments and the feature of the variation.

The configuration of the person search system 10 of the third embodiment is the same as the configuration of the person search system 10 of the second embodiment shown in Fig. 5. Further, the functional block provided in the person search apparatus 16 of the third embodiment is the same as the functional block provided in the person search apparatus 16 of the second embodiment shown in Fig. 6.

The ID storage apparatus 50 of the third embodiment further stores basic information on each person in addition to the ID information on each of the plurality of persons and the feature information on each person. The basic information may include, for example, the name, y/m/d of birth, gender, and address.

The person search apparatus 16 of the third embodiment stores the privacy-protected image, in which the privacy of the person shown in the captured image is protected, in the image storage unit 28 in the same manner as the person search apparatus 16 of the second embodiment. The person search apparatus 16 stores the person identification information related to the person shown in the captured image in the person identification information storage unit 30. The person search apparatus 16 of the third embodiment differs from the person search apparatus 16 of the second embodiment in that it receives from the user designation of a person shown in the privacy-protected image stored in the image storage unit 28 and provides the user with information on the designated person. The person identification information of the third embodiment includes the person's confidential ID in the same manner as the person identification information of the second embodiment. However, the confidential ID of the third embodiment is derived from applying decryptable encryption to the ID of the person.

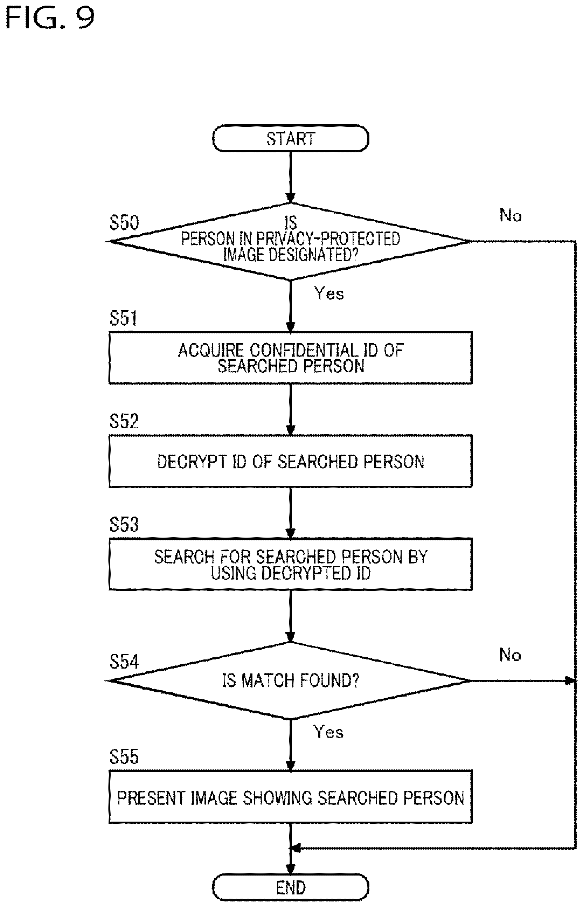

Fig. 9 is a flowchart showing an exemplary operation of the person search apparatus 16 of the third embodiment. The user terminal 14 acquires the privacy-protected image stored in the image storage unit 28 from the person search apparatus 16 in response to the user's operation and displays the privacy-protected image. The user terminal 14 transmits the searched person information related to the searched person in the privacy-protected image designated by the user to the person search apparatus 16. The searched person information transmitted from the user terminal 14 to the person search apparatus 16 in the third embodiment includes the image ID of the privacy-protected image showing the searched person and the position of the searched person in the image.

When the searched person information acquisition unit 44 receives the searched person information transmitted from the user terminal 14 (Yes in step S50), the process proceeds to step S51. When the searched person information acquisition unit 44 does not receive the searched person information transmitted from the user terminal 14 (No in step S50), the process of Fig. 9 is terminated.

In step S51, the search unit 46 searches for the person identification information identified by the image ID and the position in the image indicated by the searched person information from the plurality of person identification information items stored in the person identification information storage unit 30. The search unit 46 extracts the person identification information including the image ID and the position in the image indicated by the searched person information as the person identification information on the searched person. The search unit 46 acquires the confidential ID of the searched person indicated by the extracted person identification information. In step S52, the search unit 46 decrypts the confidential ID of the searched person and acquires the plaintext ID of the searched person.

In step S53, the search unit 46 searches for the basic information on the searched person, based on the plaintext ID of the searched person. Specifically, the search unit 46 acquires the basic information (for example, the name, address, etc.) on the searched person associated with the plaintext ID of the searched person from the ID storage apparatus 50. When the basic information on the searched person is acquired (Yes in step S54), the process proceeds to step S55. When the basic information on the searched person is not acquired (No in step S54), the process of Fig. 9 is terminated.

In step S55, the presentation unit 48 transmits the basic information (for example, the name, address, etc.) on the searched person acquired in step S53 to the user terminal 14. The user terminal 14 displays the basic information on the searched person provided from the person search apparatus 16 on the screen.

The person search apparatus 16 of the third embodiment provides the same benefit as provided by the person search apparatus 16 of the second embodiment. In further accordance with the person search apparatus 16 of the third embodiment, information on the person selected by the user in the privacy-protected image can be presented to the user.

Described above is an explanation based on the first to third embodiments. The details described in the embodiments are intended to be illustrative only and it will be understood by those skilled in the art that various modifications to combinations of constituting elements and processes described in the embodiments are possible and that such modifications are also within the scope of the present invention.

A variation applicable to the respective embodiments will be described. In each embodiment, the plurality of functional blocks provided in the person search apparatus 16 may be implemented by being distributed in a plurality of information processing apparatuses. In this case, the plurality of information processing apparatuses may communicate with each other and cooperate as a system to execute the same process as that of the person search apparatus 16 of the respective embodiments.

Any combination of the embodiment and the variation described above will also be useful as an embodiment of the present invention. New embodiments created by the combination provide the advantages of embodiment and the variation combined. It will also be understood by skilled persons that the functions that the constituting elements recited in the claims should achieve are implemented either alone or in combination by the constituting elements shown in the embodiment and the variations.

### INDUSTRIAL APPLICABILITY

The technology of the present disclosure can be applied to an information processing apparatus and an information processing system.

### REFERENCE SIGNS LIST

10 person search system, 16 person search apparatus, 34 person detection unit, 36 person identification information acquisition unit, 38 selection unit, 42 recording control unit, 44 searched person information acquisition unit, 46 search unit, 48 presentation unit, 52 concealment unit

## Claims

1. A person search apparatus comprising:
a person detection unit that detects a person shown in a captured image;
a person identification information acquisition unit that acquires person identification information adapted to identify each person detected by the person detection unit;
an image processing unit that executes a predetermined image process on the captured image so that the person shown in the captured image is not identified;
a recording control unit that records the image subjected to the predetermined image process and the person identification information corresponding to the image;
a searched person information acquisition unit that acquires searched person information that is information related to a person to be searched;
a search unit that searches for a person indicated by the searched person information from persons indicated by the person identification information recorded in advance; and
a presentation unit that presents information indicating that the person indicated by the searched person information is shown when the person indicated by the searched person information is extracted from the persons indicated by the person identification information.

2. The person search apparatus according to Claim 1, wherein the person identification information adapted to identify each person includes facial feature information on each person, and
wherein the search unit searches for the person indicated by the searched person information based on the facial feature information indicated by the person identification information recorded in advance.

3. The person search apparatus according to Claim 1,
wherein the person identification information adapted to identify each person includes ID information on each person, and
wherein the search unit searches for the person indicated by the searched person information based on the ID information indicated by the person identification information recorded in advance.

4. The person search apparatus according to any one of Claims 1 through 3, further comprising:
a concealment unit that processes the person identification information to make it difficult for a third party to decipher the person identification information.

5. A person search method comprising:
detecting a person shown in a captured image;
acquiring person identification information adapted to identify each person detected in the detecting;
executing a predetermined image process on the captured image so that the person shown in the captured image is not identified;
recording the image subjected to the predetermined image process and the person identification information corresponding to the image;
acquiring searched person information that is information related to a person to be searched;
searching for a person indicated by the searched person information from persons indicated by the person identification information recorded in advance; and
presenting information indicating that the person indicated by the searched person information is shown when the person indicated by the searched person information is extracted from the persons indicated by the person identification information.
